(19) Europäisches Patentamt / European Patent Office / Office européen des brevets

(11) **EP 2 188 163 B1**

(12) **EUROPÄISCHE PATENTSCHRIFT**

(45) Veröffentlichungstag und Bekanntmachung des Hinweises auf die Patenterteilung:
**27.06.2018 Patentblatt 2018/26**

(51) Int Cl.:
**B60W 20/00** $^{(2016.01)}$

(21) Anmeldenummer: **08802991.3**

(22) Anmeldetag: **08.08.2008**

(86) Internationale Anmeldenummer:
**PCT/EP2008/060491**

(87) Internationale Veröffentlichungsnummer:
**WO 2009/037049 (26.03.2009 Gazette 2009/13)**

(54) **VERFAHREN ZUR DYNAMISCHEN MOMENT- UND/ODER DREHZAHLKOORDINATION VON ANTRIEBSAGGREGATEN EINES HYBRIDANTRIEBS UND ENTSPRECHENDE VORRICHTUNG**

METHOD FOR THE DYNAMIC TORQUE AND/OR ROTATIONAL COORDINATION OF DRIVE UNITS OF A HYBRID DRIVE AND CORRESPONDING DEVICE

PROCEDE DE COORDINATION DYNAMIQUE DE COUPLE ET/OU DE REGIME DE MECANISMES D'ENTRAINEMENT D'UN SYSTEME DE PROPULSION HYBRIDE ET DISPOSITIF CORRESPONDANT

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **13.09.2007 DE 102007043605**

(43) Veröffentlichungstag der Anmeldung:
**26.05.2010 Patentblatt 2010/21**

(73) Patentinhaber: **Robert Bosch GmbH**
**70442 Stuttgart (DE)**

(72) Erfinder:
• **FALKENSTEIN, Jens-Werner**
**73434 Aalen (DE)**
• **LANG, Martin**
**A-3464 Hausleitel (AT)**

(56) Entgegenhaltungen:
| | |
|---|---|
| EP-A- 1 502 791 | EP-A- 1 632 378 |
| WO-A-2007/074020 | FR-A- 2 783 763 |
| JP-A- 2001 263 148 | US-A- 4 335 429 |
| US-A1- 2006 022 469 | US-B1- 6 321 143 |

• FARZAD RAJAEI SALMASI: "Control Strategies for Hybrid Electric Vehicles: Evolution, Classification, Comparison, and Future Trends" IEEE TRANSACTIONS ON VEHICULAR TECHNOLOGY, Bd. 56, Nr. 5, 11. September 2007 (2007-09-11), Seiten 2393-2404, XP002498896 IEEE
• YUAN ZHU?, YAOBIN CHEN?, GUANGYU TIAN?, HAO WU?, QUANSHI CHEN?: "A Four-Step Method to Design an Energy Management Strategy for Hybrid Vehicles" PROCEEDING OF THE 2004 AMERICAN CONTROL CONFERENCE, 2. Juli 2004 (2004-07-02), Seiten 156-161, XP002498897 AMERICAN CONTROL CONFERENCE

**Beschreibung**

Die Erfindung betrifft ein Verfahren zur dynamischen Moment- und/oder Drehzahlkoordination von Antriebsaggregaten eines Hybridantriebs eines Fahrzeugs, insbesondere Kraftfahrzeugs, wobei der Hybridantrieb in mindestens einem Betriebsmodus betrieben wird, bei dem mindestens eines der Antriebsaggregate bezüglich eines wählbaren Betriebsparameters in einem idealen oder etwa idealen Betriebspunkt mit einem/einer für dieses Antriebsaggregat idealen Moment und/oder idealen Drehzahl betrieben wird und mindestens ein anderes der Antriebsaggregate zum dynamischen Moment- und/oder Drehzahlausgleich zwischen dem idealen Moment und/oder der idealen Drehzahl und einem/einer dem Hybridantrieb abverlangten Gesamt-Sollmoment und/oder Gesamt-Solldrehzahl mit einem ausgleichenden Moment und/oder einer ausgleichenden Drehzahl betrieben wird.

Stand der Technik

Ein Verfahren und eine Vorrichtung zur dynamischen Momentkoordination von Antriebsaggregaten eines Hybridantriebs ist bekannt. Ist der Hybridantrieb zum Beispiel ein Parallel-Hybridantrieb eines Fahrzeugs, so ergibt sich ein Gesamt-Istmoment des Hybridantriebs durch eine Gewichtung und anschließende Addition der Momente (Drehmomente) des Verbrennungsmotors und der elektrischen Maschine. Die elektrische Maschine ist zum Beispiel als Startergenerator mit einem Riementrieb oder mit einer Kurbelwelle des Verbrennungsmotors verbunden. Während das Ist-Moment der elektrischen Maschine nahezu verzögerungsfrei eingestellt werden kann, weist der Verbrennungsmotor eine endliche Einstellgeschwindigkeit seines idealen Ist-Moments auf. Ein als Ottomotor ausgebildeter Verbrennungsmotor besitzt meist eine elektronische Drosselklappe zur Luftmassenstromregulierung. Die Einstellgeschwindigkeit der Drosselklappe und dynamische Füllungseffekte in einem Saugrohr des Verbrennungsmotors lassen eine hochdynamische Einstellung eines vorgegebenen Luftmassenstroms und des dadurch erzeugten idealen Ist-Moments des Verbrennungsmotors nicht zu. Ein Vorhalte-Sollmoment wirkt auf den so gebildeten Luftpfad. In einem wirkungsgradoptimalen Betriebspunkt des Verbrennungsmotors, bei idealem Zündwinkel, erzeugt der Verbrennungsmotor ein wirkungsgradoptimales (ideales) Basismoment, das dem idealen Ist-Moment entspricht. Die durch die Luftpfaddynamik bestimmte Übertragung des Vorhalte-Sollmoments auf das wirkungsgradoptimale Basismoment lässt sich näherungsweise mittels Reihenschaltung eines Totzeitgliedes und eines Verzögerungsgliedes erster Ordnung (PT1-Glied) beschreiben. Eine deutlich höhere Dynamik des Hybridantriebs lässt sich einerseits mittels der elektrischen Maschine und andererseits mittels einer Zündwinkelveränderung beim Verbrennungsmotor erzielen. Bei den bekannten Verfahren zur dynamischen Momentkoordination der Antriebsaggregate des Hybridantriebs wird eine Grundlast von dem Verbrennungsmotor in einem wirkungsgradoptimalen Betriebspunkt geleistet, während temporäre Momentanforderungen durch die elektrische Maschine oder alternativ auch durch Zündwinkeleingriffe umgesetzt werden. Bekannte Verfahren zur dynamischen Momentkoordination weisen jedoch kein Gesamtkonzept auf, das ein vorgegebenes Gesamt-Sollmoment mit hoher Dynamik in einem weiten Betriebsbereich des Hybridantriebs umsetzt und gleichzeitig vorgegebene Randbedingungen bezüglich Kraftstoffverbrauch (Wirkungsgrad), Abgasemissionen und einer Lebensdauer der Antriebsaggregate berücksichtigt. Der nächstliegende bekanntgewordene Stand der Technik ist der EP1502791 zu entnehmen.

Offenbarung der Erfindung

Zur dynamischen Momentkoordination in einem weiten Arbeitsbereich des Hybridantriebs ist mindestens ein weiterer Betriebsmodus vorgesehen, in dem das andere Antriebsaggregat bezüglich eines wählbaren Betriebsparameters in einem idealen oder etwa idealen Betriebspunkt mit einem/einer für das andere Antriebsaggregat idealen Moment und/oder idealen Drehzahl betrieben wird und mindestens das eine der Antriebsaggregate zum dynamischen Moment- und/oder Drehzahlausgleich zwischen dem/der für das andere Antriebsaggregat idealen Moment und/oder idealen Drehzahl und dem/der dem Hybridantrieb abverlangten Gesamt-Sollmoment und/oder Gesamt-Drehzahl mit einem/einer weiteren ausgleichenden Moment und/oder ausgleichenden Drehzahl betrieben wird und/oder dass ein anderer Betriebsparameter in einem weiteren Betriebsmodus gewählt wird, um das eine oder das andere Antriebsaggregat im idealen oder etwa idealen Betriebspunkt zu betreiben, wobei im laufenden Betrieb des Hybridantriebs ein Wechsel der Betriebsmodi herbeigeführt wird. Der Arbeitsbereich des Hybridantriebs wird durch die Betriebsbereiche der so beschriebenen Betriebsmodi vollständig abgedeckt, sodass der komplette Arbeitsbereich des Hybridantriebs durch Wechsel zwischen den Betriebsmodi vollständig genutzt werden kann. Der Hybridantrieb ist bevorzugt ein Parallel-Hybridantrieb. Das Gesamt-Sollmoment ist insbesondere ein wahlweise gefiltertes Gesamt-Sollmoment. Zur dynamischen Drehzahlkoordination sind die Antriebsaggregate vorzugsweise über ein Planetengetriebe mit dem Abtriebsstrang des Hybridantriebs verbunden. Prinzipiell erfolgt die dynamische Drehzahlkoordination analog der dynamischen Momentkoordination, so dass die Erfindung im Weiteren anhand des Ausführungsbeispiels der dynamischen Momentkoordination dargestellt wird.

Vorzugsweise ist vorgesehen, dass mindestens eines der Antriebsaggregate als Verbrennungsmotor und mindestens eines der Antriebsaggregate als elektrische Maschine ausgebildet ist.

Zur Erläuterung soll nun exemplarisch der einfache Fall eines Hybridantriebs mit zwei Antriebsaggregaten, insbesondere einem Verbrennungsmotor als einem Antriebsaggregat und einer elektrischen Maschine als einem anderen Antriebsaggregat, und zwei Betriebsmodi beschrieben werden. Bei einem ersten Betriebsmodus wird das eine der Antriebsaggregate bezüglich eines wählbaren Betriebsparameters in einem idealen oder etwa idealen Betriebspunkt mit einem für dieses Antriebsaggregat idealen Moment betrieben. Damit der Hybridantrieb ein ihm abverlangtes Gesamt-Sollmoment erreicht, wird das andere Antriebsaggregat zum dynamischen Momentausgleich mit einem ausgleichenden Moment betrieben. Wird der Betriebsmodi gewechselt, so ergeben sich zwei Möglichkeiten: Das eine Antriebsaggregat wird bezüglich eines anderen Betriebsparameters in einem weiteren idealen oder etwa idealen Betriebspunkt betrieben oder das andere Antriebsaggregat wird bezüglich eines (anderen) Betriebsparameters in einem idealen oder etwa idealen Betriebspunkt mit einem für das andere Antriebsaggregat idealen Moment betrieben. Ein ideales Moment für die elektrische Maschine ist beispielsweise ein Strategie-Sollmoment (tDEIS), das von einem Leistungsbedarf eines elektrischen Systems beziehungsweise Bordnetzes des Fahrzeugs bestimmt wird.

Bei der Bezeichnung der Momente wird jeweils das Moment des Antriebsaggregats im idealen oder etwa idealen Betriebspunkt als ideales Moment und das Moment zum dynamischen Momentausgleich des anderen Antriebsaggregats als ausgleichendes Moment bezeichnet.

In einer vorteilhaften Ausgestaltung der Erfindung ist vorgesehen, dass der Wechsel des Betriebsmodus bei einer Nichterfüllbarkeit des/der dem Hybridantrieb abverlangten Gesamt-Sollmoments und/oder Gesamt-Solldrehzahl im derzeit laufenden Betriebsmodus herbeigeführt wird. Bei nicht erfüllbarer Anforderung innerhalb des Betriebsbereichs wird der zugeordnete Betriebsmodus verlassen und der nachfolgende Betriebsmodus angewendet. Wird der Hybridantrieb in einem der Betriebsmodi betrieben, so erfolgt ein Wechsel insbesondere erst, wenn der Hybridantrieb an die Grenzen des Betriebsbereichs dieses Betriebsmodus stößt. Durch diese Limitierung des Wechsels wird der einzelne Betriebsbereich eines jeden Betriebsmodus voll ausgenutzt.

Mit Vorteil ist vorgesehen, dass - bei mehreren möglichen Betriebsmodi zur Realisierung des/der abverlangten Gesamt-Sollmoments und/oder Gesamt-Solldrehzahl - eine Auswahl des Betriebsmodus, in dem der Hybridantrieb betrieben wird, mittels einer Priorisierung erfolgt. Die Priorisierung ist in einer einfachen Ausführungsform eine Vorabauswahl, die angibt, in welchem Teilbereich des Gesamt-Betriebsbereichs des Hybridantriebs welcher Betriebsmodus bevorzugt angewandt wird. Dabei kann die Priorisierung auf Grundlage einer Rangliste erfolgen.

In einer vorteilhaften Ausgestaltung der Erfindung ist vorgesehen, dass ein Momentgradient und/oder Drehzahlgradient mindestens eines Sollmoments und/oder einer Solldrehzahl zur Ermöglichung eines sprung- beziehungsweise ruckfreien Betriebsübergangs des Hybridantriebs beim Wechsel der Betriebsmodi begrenzt wird. Durch eine Anpassung der Begrenzung des Momentengradients an den Betriebszustand des Hybridantriebs und/oder an die Dynamik des abverlangten Gesamt-Sollmoments bleibt den Antriebsaggregaten hinreichend Zeit für einen dynamischen Momentausgleich zwischen dem idealen Moment und dem im Hybridantrieb abverlangten Gesamt-Sollmoment.

Mit Vorteil ist vorgesehen, dass der Betriebspunkt mindestens einer der Betriebsmodi ein erster Betriebspunkt ist, in dem der Wirkungsgrad des in diesem Betriebspunkt betriebenen Antriebsaggregats optimal hoch ist. Ist dieses Antriebsaggregat der Verbrennungsmotor, beispielsweise ein Ottomotor, so ist das ideale Moment ein ideales Basismoment (EtB) des Verbrennungsmotors.

Alternativ oder zusätzlich ist mit Vorteil vorgesehen, dass der Betriebspunkt mindestens eines der Betriebsmodi ein zweiter Betriebspunkt ist, in dem das in diesem Betriebspunkt betriebene Antriebsaggregat einen optimal geringen Schadstoffausstoß aufweist. Ist dieses Antriebsaggregat der Verbrennungsmotor, beispielsweise ein Ottomotor, so ist das ideale Moment ein ideales Basismoment (EtB) des Verbrennungsmotors oder ein Minimalmoment (Etmin), das von einer Einspritzausblendung aller Zylinder des Verbrennungsmotors bewirkt ist.

Weiterhin ist mit Vorteil vorgesehen, dass der Betriebspunkt mindestens eines der Betriebsmodi ein dritter Betriebspunkt ist, in dem das in diesem Betriebspunkt betriebene Antriebsaggregat verschleißarm betrieben wird und/oder eine optimal hohe Lebenserwartung hat. Ist dieses Antriebsaggregat der Verbrennungsmotor, so wird dieser in einem Teillastbetrieb mit entsprechendem idealen Moment betrieben. Ist besagtes Antriebsaggregat eine elektrische Maschine, so wird diese mit geringer Momentdynamik oder geringer Dynamik der umgesetzten Leistung betrieben, um die Lebensdauern von elektrischer Maschine, einem elektrischen Energiespeicher zum Betreiben der elektrischen Maschine beziehungsweise einem elektrischen System zu erhöhen.

In einer vorteilhaften Ausführungsform der Erfindung ist vorgesehen, dass der Hybridantrieb - zum Betreiben mindestens eines Antriebsaggregats in einem idealen oder etwa idealen Betriebspunkt - mit einem Gesamtmoment und/oder einer Gesamtdrehzahl betrieben wird, das/die eine stationäre Abweichung von dem/der dem Hybridantrieb abverlangten Gesamt-Sollmoment und/oder Gesamt-Solldrehzahl unterhalb eines vorwählbaren Grenzwerts aufweist. Unter "stationär" sind im Zusammenhang mit dieser Anmeldung mittel- und langfristige Betriebsprozesse oder Anteile von Betriebsprozessen zu verstehen, die eine Zeitkonstante im Sekundenbereich und länger, insbesondere oberhalb einer Sekunde, aufweisen. Der vorwählbare Grenzwert der stationären Abweichung liegt vorzugsweise in einem Bereich bis 20% des Gesamt-Sollmoments.

Die Erfindung betrifft weiterhin eine entsprechende Vorrichtung zur dynamischen Momentkoordination von Antriebsaggregaten eines Hybridantriebs eines Fahrzeugs insbesondere Kraftfahrzeugs, vorzugsweise zur Durchführung des vorstehend genannten Verfahrens, wobei der Hybridantrieb in mindestens einem Betriebsmodus betrieben wird, bei dem mindestens eines der Antriebsaggregate bezüglich eines wählbaren Betriebsparameters in einem idealen oder etwa idealen Betriebspunkt mit einem/einer für dieses Antriebsaggregat idealen Moment und/oder Drehzahl betrieben wird und mindestens ein anderes der Antriebsaggregate zum dynamischen Moment- und/oder Drehzahlausgleich zwischen dem idealen Moment und/oder der idealen Drehzahl und einem/einer dem Hybridantrieb abverlangten Gesamt-Sollmoment und/oder Gesamt-Solldrehzahl mit einem ausgleichenden Moment und/oder einer ausgleichenden Drehzahl betrieben wird. Es ist mindestens ein weiterer Betriebsmodus vorgesehen, in dem das andere Antriebsaggregat bezüglich eines wählbaren Betriebsparameters in einem idealen oder etwa idealen Betriebspunkt mit einem/einer für das andere Antriebsaggregat idealen Moment und/oder idealen Drehzahl betrieben wird und mindestens das eine der Antriebsaggregate zum dynamischen Moment- und/oder Drehzahlausgleich zwischen dem/der für das andere Antriebsaggregat idealen Moment und/oder idealen Drehzahl und dem/der dem Hybridantrieb abverlangten Gesamt-Sollmoment und/oder Gesamt-Solldrehzahl mit einem/einer weiteren ausgleichenden Moment und/oder ausgleichenden Drehzahl betrieben wird und/oder dass ein anderer Betriebsparameter in einem weiteren Betriebsmodus gewählt wird, um das eine oder das andere Antriebsaggregat im idealen oder etwa idealen Betriebspunkt zu betreiben, wobei im laufenden Betrieb des Hybridantriebs ein Wechsel der Betriebsmodi herbeigeführt wird. Die Vorrichtung ist insbesondere eine Steuereinrichtung, vorzugsweise eine in einem die Aggregate koordinierenden Hybridantrieb-Steuergerät implementierte Steuereinrichtung. Das Hybridantrieb-Steuergerät ist Steuergeräten der einzelnen Antriebsaggregate übergeordnet und koordiniert die Aggregate über deren Steuergeräte. Alternativ kann ein Steuergerät eines Antriebsaggregates die Aufgaben des Hybridantrieb-Steuergerätes übernehmen. Vorzugsweise ist vorgesehen, dass mindestens eines der Antriebsaggregate als Verbrennungsmotor und mindestens eines der Antriebsaggregate als elektrische Maschine ausgebildet ist. Das Steuergerät des Verbrennungsmotors ist ein Motorsteuergerät; das Steuergerät der elektrischen Maschine ist ein Elektromaschinen-Steuergerät.

Kurze Beschreibung der Zeichnungen

Die Erfindung wird anhand der Figuren näher erläutert. Es zeigt:

Figur 1    ein Blockdiagramm eines Simulationsmodells,

Figur 2    ein Diagramm, bei dem Kenngrößen eines Verbrennungsmotors über der Zeit aufgetragen sind und

Figur 3    ein Diagramm bei dem ein Gesamt-Sollmoment und Kenngrößen einer elektrischen Maschine des Hybridantriebs über der Zeit aufgetragen sind.

Ausführungsform(en) der Erfindung

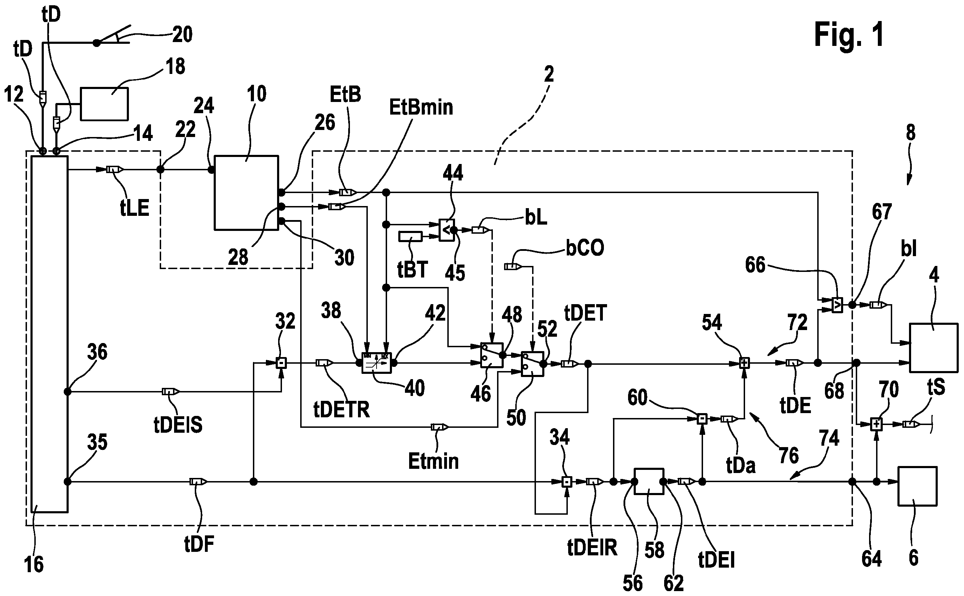

In Figur 1 ist ein Blockdiagramm einer Vorrichtung 2 zur dynamischen Momentkoordination eines als Verbrennungsmotor 4 (Ottomotor) ausgebildeten ersten Antriebsaggregats und eines als elektrische Maschine 6 ausgebildeten zweiten Antriebsaggregats eines Hybridantriebs 8 gezeigt. Ein Luftpfad des Verbrennungsmotors 4 ist dabei als separater Block 10 getrennt vom Rest des Verbrennungsmotors 4 dargestellt. In der vorliegenden Anmeldung wird der Begriff "Drehmoment" nur kurz als "Moment" bezeichnet, also zum Beispiel: Gesamt-Sollmoment statt Gesamt-Solldrehmoment oder Momentbegrenzer statt Drehmoment-Begrenzer.

Die Vorrichtung 2 weist zwei Eingänge 12, 14 auf, über die ein Strategieblock 16 ein Gesamt-Sollmoment tD vom Fahrer eines von dem Hybridantrieb 8 angetriebenen Fahrzeugs oder von einem Fahrsicherheits- oder Getriebesystem (Block 18) erhält. Dazu ist der Eingang 12 mit einem Fahrpedal 20 und der Eingang 14 mit dem Fahrsicherheits- oder Getriebesystem (Block 18) verbunden. Über entsprechende Verbindungsleitungen kann jeweils ein Gesamt-Sollmoment tD auf die Eingänge 12, 14 und somit auf den Strategieblock 16 gegeben werden. Bevorzugt wird das über das Fahrpedal 20 eingegebene Gesamt-Sollmoment tD im Strategieblock 16 gefiltert (zum Beispiel mit einem verzögernden Tiefpass-Filter, der hier nicht gezeigt ist). Das vom Fahrsicherheits- oder Getriebesystem (Block 18) vorgegebene Gesamt-Sollmoment tD bleibt bevorzugt ungefiltert.

Der Strategieblock 16 gibt ein Vorhalte-Sollmoment tLE für den Verbrennungsmotor 4 vor, das vom Strategieblock 16 wahlweise gefiltert sein kann. Das Vorhalte-Sollmoment tLE wird im Simulationsmodell über einen Ausgang 22 der Vorrichtung 2 an einen Eingang 24 des den Luftpfad des Verbrennungsmotors 4 simulierenden Blocks 10 ausgegeben. Der Block 10 ist im Simulationsmodell als Reihenschaltung eines Totzeitgliedes und eines Verzögerungsgliedes erster Ordnung (PT1-Glied) modelliert und gibt demzufolge ein dem Vorhalte-Sollmoment tLE verzögert folgendes ideales Basismoment EtB aus. Aus dem Luftpfad ergibt sich weiterhin ein minimales Basismoment EtBmin, das sich durch Spätverstellung eines Zündwinkels beim Verbrennungsmotor 4 erreichen lässt und ebenfalls vom Vorhalte-Sollmoment tLE abhängt. Das minimale Basismoment EtBmin liegt unterhalb des idealen Basismoments EtB und wird an einem Ausgang 28 des Blocks 10 ausgegeben. Durch Einspritzausblendung einzelner Zylinder des Verbrennungsmotors 4 kann das Ist-Moment des Verbrennungsmotors 4 weiterhin auf Werte unterhalb des minimalen Basismoments EtBmin reduziert werden. Bei Einspritzausblendung aller Zylinder des Verbrennungsmotors 4 (Schubabschaltung) erfolgt eine Reduktion bis auf ein Minimalmoment Etmin. Dieses Minimalmoment Etmin wird an einem Ausgang 30 des Blocks 10 ausgegeben. Für die genannten Grenzen gilt: Etmin < EtBmin < EtB.

Im Ausführungsbeispiel ist das Gesamt-Sollmoment tD so gewählt, dass die Antriebsaggregate, also der Verbrennungsmotor 4 und die elektrische Maschine 6 innerhalb erlaubter Momentgrenzen ihrer Betriebsbereiche betrieben werden. Begrenzungsmaßnahmen des Strategieblocks 16 für den Fall, dass das angeforderte Gesamt-Sollmoment tD dieser Anforderung nicht genügt, sind der Einfachheit halber nicht beschrieben. Der Strategieblock 16 gibt das wahlweise gefilterte Gesamt-Sollmoment tDF an einem Ausgang 35 an einen ersten Differenz-Block 32 und einen zweiten Differenzblock 34 der Vorrichtung 2 aus. Weiterhin gibt der Strategieblock 16 an einem weiteren Ausgang 36 ein Strategie-Sollmoment tDEIS für die elektrische Maschine 6 aus, das von einem Leistungsbedarf eines elektrischen Bordnetzes des Fahrzeugs bestimmt wird. Dabei ist die elektrische Maschine 6 Teil dieses elektrischen Bordnetzes. Der Differenzblock 32 bildet die Differenz aus dem Strategie-Sollmoment tDEIS und dem wahlweise gefilterten Gesamt-Sollmoment tDF. Diese Differenz ist ein Roh-Zielmoment tDETR für den Verbrennungsmotor 4 und wird auf einen Eingang 38 eines Begrenzungsblocks 40 gegeben. Der Begrenzungsblock 40 begrenzt das Roh-Zielmoment tDETR auf einen Wert zwischen dem vom Ausgang 26 ausgegebenen idealen Basismoment EtB und dem vom Block 10 am Ausgang 28 ausgegebenen minimalen Basismoment EtBmin, wobei sich ein begrenztes Roh-Zielmoment ergibt.

Das vom Ausgang 26 des Blocks 10 ausgegebene ideale Basismoment EtB wird in einem Vergleichsblock 44 mit einer wählbaren Momentschwelle tBT verglichen. Ist das ideale Basismoment EtB größer als diese Momentschwelle tBT, so gibt der Vergleichsblock 44 an seinem Ausgang 45 ein Aktivierungssignal bL an einen Schalter 46 aus. In Abhängigkeit vom Aktivierungssignal bL schaltet dieser entweder das ideale Basismoment EtB vom Ausgang 26 oder das am Ausgang 42 des Begrenzungsblocks 40 ausgegebene begrenzte Roh-Zielmoment auf seinen Ausgang 48. Dieses Ausgangssignal des Schalters 46 und das minimale Moment Etmin des Verbrennungsmotors 4 aus dem Ausgang 30 des Blocks 10 wird auf einen zweiten Schalter 50 gegeben. In Abhängigkeit von einem wählbaren zweiten Aktivierungssignal bCO wird entweder das Ausgangssignal des Schalters 46 oder das minimale Moment Etmin des Verbrennungsmotors 4 als Zielmoment tDET gleichzeitig auf den zweiten Differenzblock 34 und einen Addierblock 54 gegeben. Der zweite Differenzblock 34 bildet die Differenz aus dem wahlweise gefilterten Gesamt-Sollmoment tDF und dem Zielmoment tDET des Verbrennungsmotors 4. Diese Differenz ist das Roh-Elektromaschinen-Sollmoment tDEIR. Das Roh-Elektromaschinen-SollmomenttDEIR wird auf einen Eingang 56 eines Momentgradientenbegrenzer-Blocks 58 und einen dritten Differenzblock 60 gegeben. Der Momentgradientenbegrenzer-Block 58 gibt über seinen Ausgang 62 ein (momentgradientenbegrenztes) Elektromaschinen-Sollmoment tDEI an einen Ausgang 64 der Vorrichtung 2 und an den dritten Differenzblock 60 aus. Der dritte Differenzblock 60 bildet die Differenz aus dem Roh-Elektromaschinen-Sollmoment tDEIR und dem Elektromaschinen-Sollmoment tDEI. Diese Differenz ist ein Differenzmoment tDa. Dieses Differenzmoment tDa wird vom dritten Differenzblock 60 auf den Addierblock 54 gegeben. Der Addierblock 54 addiert das Zielmoment tDET und das Differenzmoment tDa zum Verbrennungsmotor-Sollmoment tDE. Dieses Verbrennungsmotor-Sollmoment tDE wird auf einen zweiten Vergleichsblock 66 und einen Ausgang 68 der Vorrichtung 2 gegeben.

Im Vergleichsblock 66 wird das am Ausgang 26 des Blocks 10 ausgegebene ideale Basismoment EtB mit dem Verbrennungsmotor-Sollmoment tDE verglichen und in Abhängigkeit dieses Vergleichs ein drittes Aktivierungssignal bl an den Verbrennungsmotor 4 ausgegeben. Das an dem Ausgang 68 ausgegebene Verbrennungsmotor-Sollmoment tDE wird an den Verbrennungsmotor 4 und das am Ausgang 64 der Vorrichtung 2 ausgegebene Elektromaschinen-Sollmoment tDEI wird an die elektrische Maschine 6 ausgegeben. Die Momente des Verbrennungsmotors 4 und der elektrischen Maschine 6 werden beim Parallel-Hybridantrieb des Ausführungsbeispiels der Figur 1 direkt addiert, was durch einen zweiten Addierblock 70 dargestellt ist, der ein Gesamtmoment tS als Summe des Verbrennungsmotor-Sollmoments tDE und des Elektromaschinen-Sollmoments tDEI ausgibt.

Zwischen dem ersten Differenzblock 32 und dem Verbrennungsmotor 4 ergibt sich ein Verbrennungsmotor-Momentpfad 72 und zwischen dem zweiten Differenzblock 34 und der elektrischen Maschine 6 ergibt sich ein Elektromaschinen-Momentpfad 74. Zwischen diesen beiden Pfaden ergibt sich zwischen dem dritten Differenzblock 60 und dem Addierblock 54 ein Querpfad 76, auf dem das Differenzmoment tDa vom Elektromaschinen-Momentpfad 74 an den Verbrennungsmotor-Momentpfad 72 übergeben wird.

Im Ausführungsbeispiel der Figur 1 wird das Zielmoment tDET als erstes Moment für den Verbrennungsmotor 4 ermittelt. Aus der Differenz zwischen dem wahlweise gefilterten Gesamt-Sollmoment tDF und dem Zielmoment tDET wird ein Roh-Elektromaschinen-Sollmoment tDEIR für das Elektromaschinen-Sollmoment tDEI der elektrischen Maschine 6 berechnet. Im Momentgradienten-Begrenzerblock 58 folgt eine Gradientenbegrenzung (Begrenzung der ersten Ableitung) dieses Rohwerts tDEIR. Das Ergebnis ist das als gradientenbegrenztes Elektromaschinen-Sollmoment tDEI ausgebildete zweite Moment der elektrischen Maschine 6. Bei aktiver Limitierung im Momentgradienten-Begrenzerblock 58 nimmt das Differenzmoment tDa Werte ungleich Null an. Das Differenzmoment tDa wird durch Subtraktion des Ausgangs 62 vom Eingang 56 des Momentgradienten-Begrenzerblocks 58 gebildet und über den Querpfad 76 zum Zielmoment tDET für den Verbrennungsmotor 4 addiert. Damit ergibt sich das Verbrennungsmotor-Sollmoment tDE für den Verbrennungsmotor 4. Liegt das Verbrennungsmotor-Sollmoment tDE unterhalb des idealen Basismoments EtB des Verbrennungsmotors, so erfolgt mit dem Aktivierungssignal bI = 1 (wahr) eine Freigabe für die Spätverstellung des Zündwinkels. Mittels entsprechender Verstellung des Zündwinkels wird das Verbrennungsmotor-Sollmoment tDE umgesetzt. Liegt das Verbrennungsmotor-Sollmoment tDE unterhalb des minimalen Basismoments EtBmin, so wird das Istmoment des Verbrennungsmotors 4 durch Einspritzausblendung einzelner Zylinder entsprechend eingestellt. Ist das Verbrennungsmotor-Sollmoment gleich dem Minimalmoment Etmin, so erfolgt eine Einspritzausblendung aller Zylinder (Schubabschaltung).

Mit einer Spätverstellung des Zündwinkels reduziert sich der Wirkungsgrad des Verbrennungsmotors 4. Bei der Einspritzausblendung einzelner Zylinder ergeben sich erhöhte Abgasemissionen, daher sollte dieser Zustand nur kurzfristig eingestellt werden. Damit ist "aus Sicht" des Verbrennungsmotors 4 ein Betrieb beim idealen Basismoment EtB oder bei einer Einspritzausblendung aller Zylinder anzustreben. Diesem Betrieb entspricht einem dritter Betriebsmodus, in dem der Verbrennungsmotor 4 einen optimal geringen Schadstoffausstoß aufweist.

Insbesondere bei hohen Basismomenten ergeben sich hohe Leistungen. Eine Spätverstellung des Zündwinkels sollte hierbei vermieden werden, da eine damit verbundene Verschlechterung des Wirkungsgrades sonst hohe Verlustleistungen ergibt. Im Ausführungsbeispiel wird der erste Betriebsmodus bei hohen Basismomenten größer oder gleich einer wählbaren Momentschwelle tBT gewählt, dabei ist das zweite Aktivierungssignal bL = 0 (falsch). Der Schalter 46 gibt das ideale Basismoment EtB vom Ausgang 26 an seinem Ausgang 48 aus. Alle Zylinder des Verbrennungsmotors befinden sich im einspritzenden Betrieb. Das Zielmoment tDET für den Verbrennungsmotor wird gleich dem idealen Basismoment EtB gesetzt. Ist die Gradientenbegrenzung für das Elektromaschinen-Sollmoment tDEI nicht aktiv (tDa = 0) so entspricht das Verbrennungsmotor-Sollmoment tDE des Verbrennungsmotors 4 dem Zielmoment tDET (erstes Moment) und damit dem idealen Basismoment EtB. Es gilt: tDE = tDET = EtB

Die elektrische Maschine 6 liefert das zweite Moment und gleicht die Differenz zum wahlweise gefilterten Gesamt-Sollmoment tDF aus. Es gilt: tDEI = tDEIR = tDF - tDET

Insgesamt stellt sich somit das wahlweise gefilterte Gesamt-Sollmoment tDF ein. Es gilt:

$$tDE + tDEI = tDF$$

Bei dynamischem Betrieb des Hybridantriebs 8 kann dies zu einem dynamischen Verlauf des Elektromaschinen-Sollmoments tDEI führen, während der Verbrennungsmotor 4 bei idealem Basismoment EtB betrieben wird. Eine Spätverstellung des Zündwinkels wird im ersten Betriebsmodus aus Wirkungsgradgründen vermieden.

Vorteilhaft ist, wenn der Strategieblock 16 im quasi stationären Betrieb des Hybridantriebs das Vorhalte-Solldrehmoment tLE für den Verbrennungsmotor 4 so vorgibt, dass das Elektromaschinen-Solldrehmoment tDEI näherungsweise dem vorgegebenen Strategie-Sollmoment tDEIS entspricht und somit der Leistungsbedarf des elektrischen Bordnetzes erfüllt wird.

Das mittels Vorhalte-Sollmoment tLE einstellbare ideale Basismoment EtB ist physikalisch nach unten begrenzt, meist auf Momente nahe Null. Damit kann der Verbrennungsmotor 4 im Einspritzbetrieb negative Momente nur mittels einer Spätverstellung des Zündwinkels erzeugen. Bei Hybridfahrzeugen kann eine Zündwinkelverstellung am Verbrennungsmotor 4 temporär vermieden werden, wenn die elektrische Maschine 6 genutzt wird, um ein negatives wahlweise gefiltertes Gesamt-Sollmoment tDF einzustellen. Dies ist meist nur temporär möglich, da ein elektrischer Energiespeicher des elektrischen Bordnetzes dabei stark geladen wird. Liegt ein kleines Basismoment vor, ergeben sich bei einer Spätverstellung des Zündwinkels geringe Verlustleistungen.

Im Ausführungsbeispiel wird der zweite Betriebsmodus bei einem kleinen Basismoment unterhalb der Momentschwelle tBT gewählt. Dann ist das Aktivierungssignal bL = 1 (wahr) Der Schalter 46 gibt das am Ausgang 42 des Begrenzerblocks 40 ausgegebene begrenzte Roh-Zielmoment tDETR an seinem Ausgang 48 aus. Alle Zylinder des Verbrennungsmotors 4 befinden sich im einspritzenden Betrieb. Das Zielmoment tDET für den Verbrennungsmotor 4 ergibt sich aus der Differenz zwischen dem wahlweise gefilterten Gesamt-Sollmoment tDF und dem Strategie-Sollmoment tDEIS. Mit dem Begrenzungsblock 40 wird das Roh-Zielmoment tDETR auf den durch Verstellung des Zündwinkels einstellbaren Bereich zwischen dem minimalen Basismoment EtBmin und dem idealen Basismoment EtB begrenzt. Es gilt:

$$tDET = \min(EtB, \max((tDF - tDEIS), EtBmin))$$

Sind die Begrenzungen im Begrenzungsblock 40 und die Gradientenbegrenzung im Momentgradienten-Begrenzerblock 58 nicht aktiv (Differenzmoment tDa = 0), so gilt:

$$tDE = tDET = tDF - tDEIS$$

und

$$tDEI = tDEIR = tDF - tDET = tDEIS$$

Das Elektromaschinen-Sollmoment tDEI entspricht dann dem Strategie-Sollmoment tDEIS, der Verbrennungsmotor 4 gleicht die Differenz zum wahlweise gefilterten Gesamt-Sollmoment tDF aus. Entgegen dem oben dargestellten ersten Betriebsmodus bei hohem Basismoment führt ein dynamischer Betrieb des Hybridantriebs im zweiten Betriebsmodus bei kleinem Basismoment zu einem dynamischen Verlauf des Verbrennungsmotor-Sollmoments tDE, das mittels Zündwinkelverstellung eingestellt wird, während die elektrische Maschine 6 bei idealem Strategie-Sollmoment tDEIS mit geringer Dynamik betrieben wird. Die geringe Dynamik der Elektromaschine in diesem zweiten Betriebsmodus erhöht die Lebensdauer des elektrischen Energiespeichers beziehungsweise des elektrischen Systems.

Mit dem Aktivierungssignal bCO = 1 (true) kann die Steuerung eine Einspritzausblendung aller Zylinder (Schubabschaltung) anfordern. Dabei wird ein dritter Betriebsmodus gewählt. Das Zielmoment tDET für den Verbrennungsmotor 4 wird dann gleich dem Minimalmoment Etmin gesetzt. Ist die Gradientenbegrenzung für das Elektromaschinen-Sollmoment tDEI nicht aktiv (tDa = 0), so entspricht das Verbrennungsmotor-Sollmoment tDE dem Minimalmoment Etmin des Verbrennungsmotors 4. Es gilt: tDE = tDET = Etmin

Die elektrische Maschine gleicht die Differenz zum wahlweise gefilterten Gesamt-Sollmoment tDF aus. Es gilt:

$$tDEI = tDEIR = tDF - tDET,$$

sodass sich in Summe das wahlweise gefilterte Gesamt-Sollmoment tDF einstellt. Entsprechend dem ersten Betriebsmodus bei hohem Basismoment führt dies im dynamischen Betrieb des Hybridantriebs zu einem dynamischen Verlauf des Elektromaschinen-Sollmoments tDEI der elektrischen Maschine 6. Der Verbrennungsmotor 4 wird beim Minimalmoment Etmin des Verbrennungsmotors 4 bei einer Einspritzausblendung aller Zylinder betrieben. Einspritzausblendungen einzelner Zylinder, die zu erhöhten Emissionen führen würden, werden vermieden.

Für sprungfreie Übergänge zwischen dem Betriebsmodi sorgt die Gradientenbegrenzung für das Solldrehmoment tDEI der elektrischen Maschine 6 im Momentengradienten-Begrenzerblock 58. Das Differenzmoment tDa wird über den Querpfad 76 auf das Zielmoment tDET für den Verbrennungsmotor 4 addiert. Damit ergeben sich auch sprungfreie Verläufe für das Verbrennungsmotor-Sollmoment tDE.

Im Ausführungsbeispiel wird die Größe des Basismoments für die Auswahl des Betriebsmodus herangezogen. Dies ist beispielhaft zu sehen, zum Beispiel kann auch ein Leerlauf- beziehungsweise Drehzahlregler entscheiden, welches beziehungsweise welche der Aggregate bei idealem Drehmoment betrieben wird/werden und welche/welches die Reglereingriffe stellt/stellen.

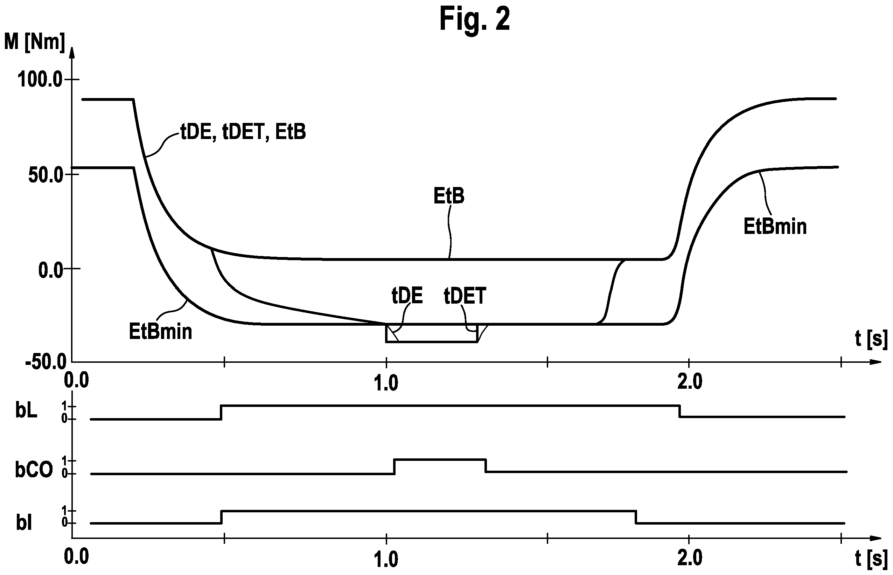

Die Figur 2 zeigt ein Diagramm, in dem Momente (Drehmomente) M des Verbrennungsmotors 4 über einen Zeitintervall von 0 bis 2,5 s aufgetragen sind. Die aufgetragenen Momente sind das ideale Basismoment EtB, das minimale Basismoment EtBmin, das Verbrennungsmotor-Zielmoment tDET und das Verbrennungsmotor-Sollmoment tDE. Unterhalb des Diagramms ist der Zustand der drei Aktivierungssignale bL, bCO, bl über dem gleichen Zeitintervall aufgetragen. Jedes der Aktivierungssignale bL, bCO, bl kann entweder einen Zustand 1 (wahr) oder einen Zustand 0 (falsch) aufweisen.

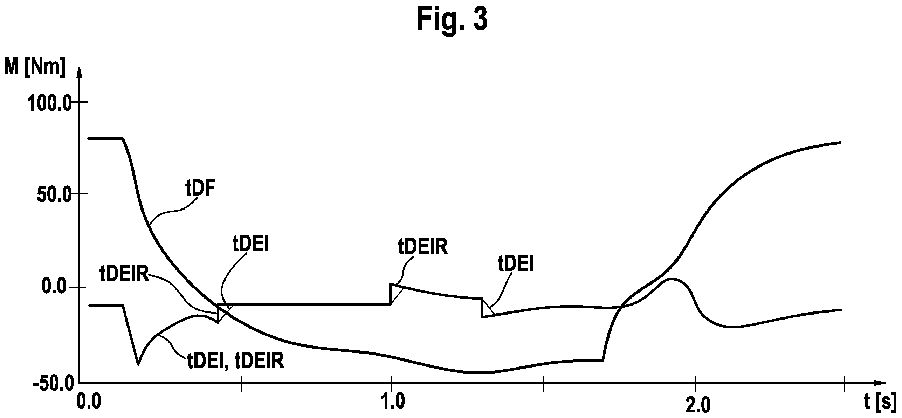

Die Figur 3 zeigt ein Diagramm, in dem die Momente (Drehmomente) M der elektrischen Maschine 6 im gleichen Zeitfenster aufgetragen sind. Die aufgetragenen Momente der Figur 3 sind das wahlweise gefilterte Gesamt-Sollmoment tDF, das Roh-Elektromaschinen-Sollmoment tDEIR und das Elektromaschinen-Sollmoment tDEI.

Die Figuren 2 und 3 beschreiben dabei die Ergebnisse einer Simulation, die mit dem Simulationsmodell der Figur 1 erstellt ist. Das Strategie-Sollmoment tDEIS beträgt während der gesamten Simulationszeit -10 Nm (Newtonmeter) und das Minimalemoment Etmin des Verbrennungsmotors 4 ist mit -40 Nm konstant. Zu Beginn der gezeigten Simulation liegt mit hohem Basismoment der erste Betriebsmodus vor. Dabei wird im quasi stationären Betrieb des Hybridantriebs bis etwa t = 0,1 s das Vorhalte-Sollmoment tLE für den Verbrennungsmotor 4 so vorgegeben, dass das Elektromaschinen-Sollmoment tDEI der elektrischen Maschine 6 näherungsweise dem vorgegebenen Strategie-Sollmoment tDEIS = -10 Nm entspricht.

Bis zum Zeitpunkt von etwa t = 0,4 s liegen das ideale Basismoment EtB, das Zielmoment tDET und das Verbrennungsmotor-Sollmoment tDE beieinander. Das Elektromaschinen-Sollmoment tDEI gleicht die verzögerte Reaktion des idealen Basismoments EtB bei fallendem (wahlweise gefilterten) Gesamt-Sollmoment tDF aus. Um dies zu ermöglichen, werden im Momentgradienten-Begrenzerblock 58 hohe Gradienten des Elektromaschinen-Sollmoments tDEI zugelassen.

Der zweite Betriebsmodus wird aktiv, sobald das ideale Basismoment EtB die Momentschwelle tBT unterschreitet (erstes Aktivierungssignal bL = 1 (true)). Dabei ergibt sich für das Zielmoment tDET und für das Roh-Elektromaschinen-Sollmoment tDEIR jeweils ein Sprung. Die Gradientenbegrenzung des Momentgradienten-Begrenzerblocks 58 sorgt für sprungfreie Verläufe der Sollmomente der Antriebsmaschinen (Verbrennungsmotor-Sollmoment tDE und Elektromaschinen-Sollmoment tDEI). Sobald diese "Verrampung" ab ca. t = 0,45 s abgeschlossen ist, wird die elektrische Maschine 6 erfindungsgemäß beim Strategiesollmoment tDEIS von -10 Nm betrieben. Im Zeitraum von etwa t = 1 s bis etwa t = 1,3 s liegt mit dem Aktivierungssignal bCO = 1 (wahr) der dritte Betriebsmodus mit einer Einspritzausblendung aller Zylinder des Verbrennungsmodus 4 (Schubabschaltung) vor. Die Übergänge sind ebenfalls sprungfrei. Die rampenförmigen Verläufe des Verbrennungsmotor-Sollmoments tDE bei den Übergängen werden am Verbrennungsmotor 4 durch eine kurzzeitige Einspritzausblendung einzelner Zylinder umgesetzt. Um nach dem rampenförmigen Übergang eine kurzzeitige Einspritzung an einzelnen Zylindern infolge eines dynamischen Verlaufs des wahlweise gefilterten Gesamt-Sollmoments tDF zu verhindern, werden auch im dritten Betriebsmodus im Momentgradienten-Begrenzerblock 58 hohe Gradienten des Elektromaschinen-Solldrehmoments tDEI zugelassen. Die Summe (allgemein das Gesamtmoment tS) der beiden Antriebsmaschinen-Sollmomente tDEI, tDE entspricht während der gesamten Simulation dem wahlweise gefilterten Gesamt-Sollmoment tDF.

Im gezeigten Ausführungsbeispiel wird der Einsatz der Erfindung an einem als Ottomotor ausgebildeten Verbrennungsmotor 4 und einer als Kurbelwellenstartergenerator ausgebildeten elektrischen Maschine 6 eines als Parallel-Hybridantrieb ausgebildeten Hybridantriebs beschrieben. Die Betriebsmodi, deren Auswahl und daraus resultierende Maßnahmen sind exemplarisch zu sehen. Es können auch modifizierte oder völlig andere Betriebsmodi, insbesondere auf andere Antriebsaggregat-Typen, zugrunde gelegt werden. Ein möglicher anderer Betriebsmodus ergibt sich mit abgasoptimalen Betriebspunkten durch Berücksichtigung der Rauchgrenze bei einem als Dieselmotor ausgebildeten Verbrennungsmotor 4. Ein weiterer Betriebsmodus ergibt sich durch die allgemeine Anforderung nach wirkungsgradoptimalen Betriebspunkten anstatt der Vermeidung von Zündwinkeleingriffen.

Mit Vorteil ist weiterhin vorgesehen, dass je nach Betriebszustand der Antriebsaggregate - zum Beispiel charakterisiert durch deren Drehzahlen - unterschiedliche Parameter, zum Beispiel für die Gradientenbegrenzung des Elektromaschinen-Sollmoments tDEI und/oder die Auswahl eines Betriebsmodus (mittels Momentschwelle tBT) vorzugeben.

Die Erfindung kann dabei bei allen Hybridantrieben eingesetzt werden, insbesondere bei Hybridantrieben, bei denen die Momente eines Verbrennungsmotors und einer oder mehrerer elektrischer Maschinen zusammen ein Gesamtmoment tS ergeben.

**Patentansprüche**

1. Verfahren zur dynamischen Moment- und/oder Drehzahlkoordination von Antriebsaggregaten (4,6) eines Hybridantriebs eines Fahrzeugs, insbesondere Kraftfahrzeugs, wobei der Hybridantrieb in mindestens einem Betriebsmodus betrieben wird, bei dem mindestens eines der Antriebsaggregate (4, 6) bezüglich eines wählbaren Betriebsparameters in einem idealen oder etwa idealen Betriebspunkt mit einem/einer für dieses Antriebsaggregat (4, 6) idealen Moment und/oder idealen Drehzahl betrieben wird und mindestens ein anderes der Antriebsaggregate (4, 6) zum dynamischen Moment- und/oder Drehzahlausgleich zwischen dem idealen Moment und/oder der idealen Drehzahl und einem/einer dem Hybridantrieb abverlangten Gesamt-Sollmoment und/oder Gesamt-Solldrehzahl mit einem ausgleichenden Moment und/oder einer ausgleichenden Drehzahl betrieben wird, **gekennzeichnet durch** mindestens einen weiteren Betriebsmodus, in dem das andere Antriebsaggregat (4, 6) bezüglich eines wählbaren Betriebsparameters in einem idealen oder etwa idealen Betriebspunkt mit einem/einer für das andere Antriebsaggregat (4, 6) idealen Moment und/oder idealen Drehzahl betrieben wird und mindestens das eine der Antriebsaggregate (4, 6) zum dynamischen Moment- und/oder Drehzahlausgleich zwischen dem/der für das andere Antriebsaggregat (4, 6) idealen Moment und/oder idealen Drehzahl und dem/der dem Hybridantrieb abverlangten Gesamt-Sollmoment und/oder Gesamt-Drehzahl mit einem/einer weiteren ausgleichenden Moment und/oder ausgleichenden Drehzahl betrieben wird und/oder dass ein anderer Betriebsparameter in einem weiteren Betriebsmodus gewählt wird, um das eine oder das andere Antriebsaggregat (4, 6) im idealen oder etwa idealen Betriebspunkt zu betreiben, wobei im laufenden Betrieb des Hybridantriebs ein Wechsel der Betriebsmodi herbeigeführt wird.

2. Verfahren nach Anspruch 1, **dadurch gekennzeichnet, dass** mindestens eines der Antriebsaggregate (4, 6) als Verbrennungsmotor und mindestens eines der Antriebsaggregate (4, 6) als elektrische Maschine ausgebildet ist.

3. Verfahren nach einem der vorhergehenden Ansprüche, **dadurch gekennzeichnet, dass** der Wechsel des Betriebsmodus bei einer Nichterfüllbarkeit des/der dem Hybridantrieb abverlangten Gesamt-Sollmoments und/oder Gesamt-Solldrehzahl im derzeit laufenden Betriebsmodus herbeigeführt wird.

4. Verfahren nach einem der vorhergehenden Ansprüche, **dadurch gekennzeichnet, dass** - bei mehreren möglichen Betriebsmodi zur Realisierung des/der abverlangten Gesamt-Sollmoments und/oder Gesamt-Solldrehzahl - eine Auswahl des Betriebsmodus, in dem der Hybridantrieb betrieben wird, mittels einer Priorisierung erfolgt.

5. Verfahren nach einem der vorhergehenden Ansprüche, **dadurch gekennzeichnet, dass** ein Momentgradient und/oder Drehzahlgradient mindestens eines Sollmoments und/oder einer Solldrehzahl zur Ermöglichung eines ruckfreien Betriebsübergangs des Hybridantriebs beim Wechsel der Betriebsmodi begrenzt wird.

6. Verfahren nach einem der vorhergehenden Ansprüche, **dadurch gekennzeichnet, dass** der Betriebspunkt ein erster Betriebspunkt ist, in dem der Wirkungsgrad des in diesem Betriebspunkt betriebenen Antriebsaggregats (4, 6) optimal hoch ist.

7. Verfahren nach einem der vorhergehenden Ansprüche, **dadurch gekennzeichnet, dass** der Betriebspunkt ein zweiter Betriebspunkt ist, in dem das in diesem Betriebspunkt betriebene Antriebsaggregat (4, 6) einen optimal geringen Schadstoffausstoß aufweist.

8. Verfahren nach einem der vorhergehenden Ansprüche, **dadurch gekennzeichnet, dass** der Betriebspunkt ein dritter Betriebspunkt ist, in dem das in diesem Betriebspunkt betriebene Antriebsaggregat (4, 6) verschleißarm betrieben wird und/oder eine optimal hohe Lebenserwartung hat.

9. Verfahren nach einem der vorhergehenden Ansprüche, **dadurch gekennzeichnet, dass** der Hybridantrieb - zum Betreiben mindestens eines Antriebsaggregats (4, 6) in einem idealen oder etwa idealen Betriebspunkt - mit einem Gesamtmoment und/oder einer Gesamtdrehzahl betrieben wird, das/die eine stationäre Abweichung von dem/der dem Hybridantrieb abverlangten Gesamt-Sollmoment und/oder Gesamt-Solldrehzahl unterhalb eines vorwählbaren Grenzwerts aufweist.

10. Vorrichtung zur dynamischen Moment- und/oder Drehzahlkoordination von Antriebsaggregaten eines Hybridantriebs eines Fahrzeugs, insbesondere Kraftfahrzeugs, vorzugsweise zur Durchführung eines Verfahrens nach mindestens einem der vorhergehenden Ansprüchen, wobei der Hybridantrieb in mindestens einem Betriebsmodus betrieben wird, bei dem mindestens eines der Antriebsaggregate (4, 6) bezüglich eines wählbaren Betriebsparameters in einem idealen oder etwa idealen Betriebspunkt mit einem/einer für dieses Antriebsaggregat (4, 6) idealen Moment und/oder Drehzahl betrieben wird und mindestens ein anderes der Antriebsaggregate (4, 6) zum dynamischen Moment- und/oder Drehzahlausgleich zwischen dem idealen Moment und/oder der idealen Drehzahl und einem/einer dem Hybridantrieb abverlangten Gesamt-Sollmoment und/oder Gesamt-Solldrehzahl mit einem ausgleichenden Moment und/oder einer ausgleichenden Drehzahl betrieben wird, **gekennzeichnet durch** mindestens einen weiteren Betriebsmodus, in dem das andere Antriebsaggregat (4,6) bezüglich eines wählbaren Betriebsparameters in einem idealen oder etwa idealen Betriebspunkt mit einem/einer für das andere Antriebsaggregat (4,6) idealen Moment (EtB,Etmin,tDEIS) und/oder idealen Drehzahl betrieben wird und mindestens das eine der Antriebsaggregate (4,6) zum dynamischen Moment- und/oder Drehzahlausgleich zwischen dem/der für das andere Antriebsaggregat (4,6) idealen Moment (EtB,Etmin,tDEIS) und/oder idealen Drehzahl und dem/der dem Hybridantrieb (8) abverlangten Gesamt-Sollmoment (tDF) und/oder Gesamt-Solldrehzahl mit einem/einer weiteren ausgleichenden Moment und/oder ausgleichenden Drehzahl betrieben wird und/oder dass ein anderer Betriebsparameter in einem weiteren Betriebsmodus gewählt wird, um das eine oder das andere Antriebsaggregat (4,6) im idealen oder etwa idealen Betriebspunkt zu betreiben, wobei im laufenden Betrieb des Hybridantriebs (8) ein Wechsel der Betriebsmodi herbeigeführt wird.

**Claims**

1. Method for the dynamic torque and/or rotational speed coordination of drive units (4, 6) of a hybrid drive of a vehicle, in particular motor vehicle, wherein the hybrid drive is operated in at least one operating mode in which at least one of the drive units (4, 6) is operated at an ideal or approximately ideal operating point, with respect to a selectable operating parameter, with an ideal torque and/or ideal rotational speed for this drive unit (4, 6), and at least one other of the drive units (4, 6) is operated to carry out dynamic torque and/or rotational speed compensation between the ideal torque and/or the ideal rotational speed and a total target torque and/or total target rotational speed demanded from the hybrid drive with a compensating torque and/or a compensating rotational speed, **characterized by** at least one further operating mode in which the other drive unit (4, 6) is operated at an ideal or approximately ideal operating point, with respect to a selectable operating parameter, with an ideal torque and/or ideal rotational speed for the other drive unit (4, 6), and at least one of the drive units (4, 6) is operated to carry out dynamic torque and/or rotational speed compensation between the ideal torque and/or ideal rotational speed for the other drive unit (4, 6), and the total target torque and/or total rotational speed demanded from the hybrid drive with a further compensating torque and/or compensating rotational speed, and/or in that another operating parameter is selected in a further operating mode, in order to operate the one or the other drive unit (4, 6) at the ideal or approximately ideal operating point, wherein a changeover of the operating modes is brought about during the ongoing operation of the hybrid drive.

2. Method according to Claim 1, **characterized in that** at least one of the drive units (4, 6) is embodied as an internal combustion engine and at least one of the drive units (4, 6) is embodied as an electric machine.

3. Method according to one of the preceding claims, **characterized in that** the changeover of the operating mode is brought about when the total target torque and/or total target rotational speed demanded from the hybrid drive is not able to be met in the currently ongoing operating mode.

4. Method according to one of the preceding claims, **characterized in that**, in the case of a plurality of possible operating modes for implementing the demanded total target torque and/or total target rotational speed, a selection of the operating mode in which the hybrid drive is operated is made by means of a prioritization process.

5. Method according to one of the preceding claims, **characterized in that** a torque gradient and/or rotational speed gradient of at least one target torque and/or one target rotational speed is limited in order to permit a smooth operating transition of the hybrid drive at the changeover of the operating modes.

6. Method according to one of the preceding claims, **characterized in that** the operating point is a first operating point at which the efficiency of the drive unit (4, 6) which is operated at this operating point is at an optimum high level.

7. Method according to one of the preceding claims, **characterized in that** the operating point is a second operating point at which the drive unit (4, 6) which is operated at this operating point has an optimum low level of emissions of pollutants.

8. Method according to one of the preceding claims, **characterized in that** the operating point is a third operating point at which the drive unit (4, 6) which is operated at this operating point is operated with low wear and/or has an optimum high service life expectation.

9. Method according to one of the preceding claims, **characterized in that**, in order to operate at least one drive unit (4, 6) at an ideal or approximately ideal operating point, the hybrid drive is operated with a total torque and/or a total rotational speed which has a steady-state deviation from the total target torque and/or total target rotational speed demanded from the hybrid drive below a preselectable limiting value.

10. Device for the dynamic torque and/or rotational speed coordination of drive units of a hybrid drive of a vehicle, in particular motor vehicle, preferably for carrying out a method according to at least one of the preceding claims, wherein the hybrid drive is operated in at least one operating mode in which at least one of the drive units (4, 6) is operated at an ideal or approximately ideal operating point, with respect to a selectable operating parameter, with an ideal torque and/or rotational speed for this drive unit (4, 6), and at least one other of the drive units (4, 6) is operated to carry out dynamic torque and/or rotational speed compensation between the ideal torque and/or the ideal rotational speed and a total target torque and/or total target rotational speed demanded from the hybrid drive with a compensating torque and/or a compensating rotational speed, **characterized by** at least one further operating mode in which the other drive unit (4, 6) is operated at an ideal or approximately ideal operating point, with respect to a selectable operating parameter, with an ideal torque (EtB, Etmin, tDEIS) and/or ideal rotational speed for the other drive unit (4, 6), and at least one of the drive units (4, 6) is operated to carry out dynamic torque and/or rotational speed compensation between the ideal torque (EtB, Etmin, tDEIS) and/or ideal rotational speed for the other drive unit (4, 6), and the total target torque (tDF) and/or total target rotational speed demanded from the hybrid drive (8) with a further compensating torque and/or compensating rotational speed, and/or in that another operating parameter is selected in a further operating mode, in order to operate the one or the other drive unit (4, 6) at the ideal or approximately ideal operating point, wherein a changeover of the operating modes is brought about during the ongoing operation of the hybrid drive (8).

**Revendications**

1. Procédé de coordination dynamique du couple et/ou la vitesse de rotation d'ensembles d'entraînement (4, 6) d'un entraînement hybride de véhicule, en particulier d'un véhicule automobile,
l'entraînement hybride pouvant être utilisé en au moins un mode de fonctionnement dans lequel au moins l'un des ensembles d'entraînement (4, 6) est utilisé en un point de fonctionnement idéal ou quasi idéal, à un couple idéal et/ou une vitesse de rotation idéale de cet ensemble d'entraînement (4, 6) pour un paramètre de fonctionnement sélectionnable et au moins un autre des ensembles d'entraînement (4, 6) est utilisé à un couple de compensation et/ou une vitesse de rotation de compensation en vue d'une compensation dynamique du couple et/ou de la vitesse de rotation entre le couple idéal et/ou la vitesse de rotation idéale et un couple de consigne global et/ou une vitesse de rotation de consigne globale que l'on attend de l'entraînement hybride,
**caractérisé par**
au moins un autre mode de fonctionnement dans lequel l'autre ensemble d'entraînement (4, 6) est utilisé en un point de fonctionnement idéal ou quasi idéal, à un couple idéal et/ou une vitesse de rotation idéale de cet ensemble d'entraînement (4, 6) pour un paramètre de fonctionnement sélectionnable et au moins le premier des ensembles d'entraînement (4, 6) est utilisé à un autre couple de compensation et/ou une autre vitesse de rotation de compensation en vue de la compensation dynamique du couple et/ou de la vitesse de rotation entre le couple idéal et/ou la vitesse de rotation idéale de l'autre ensemble d'entraînement (4, 6) et le couple de consigne global et/ou la vitesse de rotation globale que l'on attend de l'entraînement hybride et/ou
en ce qu'un autre paramètre de fonctionnement est sélectionné dans un autre mode de fonctionnement pour utiliser l'un ou l'autre des ensembles d'entraînement (4, 6) en leur point de fonctionnement idéal ou quasi idéal, un changement de mode de fonctionnement étant réalisé pendant que l'entraînement hybride est en fonctionnement.

2. Procédé selon la revendication 1, **caractérisé en ce qu'**au moins l'un des ensembles d'entraînement (4, 6) est configuré comme moteur à combustion interne et au moins l'un des ensembles d'entraînement (4, 6) est configuré comme machine électrique.

3. Procédé selon l'une des revendications précédentes, **caractérisé en ce que** le changement de mode de fonctionnement est réalisé au cas où le couple de consigne global et/ou la vitesse de rotation de consigne globale attendus de l'entraînement hybride ne sont pas réalisés dans le mode de fonctionnement en cours.

4. Procédé selon l'une des revendications précédentes, **caractérisé en ce que** lorsque plusieurs modes de fonctionnement sont possibles pour atteindre le couple de consigne global attendu et/ou la vitesse de rotation globale attendue, une sélection du mode de fonctionnement dans lequel l'entraînement hybride est utilisé s'effectue au moyen d'un ordre de priorité.

5. Procédé selon l'une des revendications précédentes, **caractérisé en ce que** le gradient du couple et/ou le gradient de la vitesse de rotation d'au moins un couple de consigne et/ou d'au moins une vitesse de rotation de consigne sont limités pour permettre une transition sans à coup de l'entraînement hybride lors du changement de mode de fonctionnement.

6. Procédé selon l'une des revendications précédentes, **caractérisé en ce que** le point de fonctionnement est un premier point de fonctionnement dans lequel le rendement de l'ensemble d'entraînement (4, 6) utilisé en ce point de fonctionnement est optimal.

7. Procédé selon l'une des revendications précédentes, **caractérisé en ce que** le point de fonctionnement est un deuxième point de fonctionnement en lequel l'ensemble d'entraînement (4, 6) utilisé en ce point de fonctionnement présente une émission optimale de substance nocive.

8. Procédé selon l'une des revendications précédentes, **caractérisé en ce que** le point de fonctionnement est un troisième point de fonctionnement en lequel est utilisé à faible usure et/ou à une essence de vie optimale.

**9.** Procédé selon l'une des revendications précédentes, **caractérisé en ce que** pour faire fonctionner au moins un ensemble d'entraînement (4, 6) en un point de fonctionnement idéal ou quasi idéal, l'entraînement hybride est utilisé à un couple global et/ou une vitesse de rotation globale tels qu'un écart stationnaire entre le couple de consigne global et/ou la vitesse de rotation de consigne globale attendus de l'entraînement hybride sont inférieurs à une valeur limite prédéterminée.

**10.** Ensemble de coordination dynamique du couple et/ou de la vitesse de rotation d'ensembles d'entraînement d'un entraînement hybride de véhicule, en particulier d'un véhicule automobile, de préférence destiné à mettre en oeuvre un procédé selon au moins l'une des revendications précédentes, l'entraînement hybride pouvant être utilisé en au moins un mode de fonctionnement dans lequel au moins l'un des ensembles d'entraînement (4, 6) est utilisé en un point de fonctionnement idéal ou quasi idéal, à un couple idéal et/ou une vitesse de rotation idéale de cet ensemble d'entraînement (4, 6) pour un paramètre de fonctionnement sélectionnable et au moins un autre des ensembles d'entraînement (4, 6) est utilisé à un couple de compensation et/ou une vitesse de rotation de compensation en vue d'une compensation dynamique du couple et/ou de la vitesse de rotation entre le couple idéal et/ou la vitesse de rotation idéale et un couple de consigne global et/ou une vitesse de rotation de consigne globale que l'on attend de l'entraînement hybride,

**caractérisé par**

au moins un autre mode de fonctionnement dans lequel l'autre ensemble d'entraînement (4, 6) est utilisé à un point de fonctionnement idéal ou quasi idéal, à un couple idéal (EtB, Etmin, tDEIS) et/ou une vitesse de rotation idéale de l'autre ensemble d'entraînement (4, 6) pour un paramètre de fonctionnement sélectionnable et le premier des ensembles d'entraînement (4, 6) est utilisé à un autre couple de compensation et/ou une autre vitesse de rotation de compensation en vue de la compensation dynamique du couple et/ou de la vitesse de rotation entre le couple idéal (EtB, Etmin, tDEIS) et/ou la vitesse de rotation idéale de l'autre ensemble d'entraînement (4, 6) et le couple de consigne global (tDf) et/ou la vitesse de rotation de consigne globale que l'on attend de l'entraînement hybride (8) et/ou

en ce qu'un autre paramètre de fonctionnement est sélectionné dans un autre mode de fonctionnement pour utiliser l'un ou l'autre des ensembles d'entraînement (4, 6) en leur point de fonctionnement idéal ou quasi idéal, un changement de mode de fonctionnement étant réalisé pendant que l'entraînement hybride (8) est en fonctionnement.

Fig. 1

EP 2 188 163 B1

13

# Fig. 2

EP 2 188 163 B1

# Fig. 3

EP 2 188 163 B1

**EP 2 188 163 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1502791 A